Europäisches Patentamt

European Patent Office

Office européen des brevets

(11) Veröffentlichungsnummer: **0 295 565 B1**

# (12) EUROPÄISCHE PATENTSCHRIFT

(45) Veröffentlichungstag der Patentschrift:
19.09.90

(21) Anmeldenummer: 88109140.9

(22) Anmeldetag: 08.06.88

(51) Int. Cl.⁵: **A47J 31/40**

(54) **Kaffeemaschine.**

(30) Priorität: 16.06.87 DE 3720149

(43) Veröffentlichungstag der Anmeldung:
21.12.88 Patentblatt 88/51

(45) Bekanntmachung des Hinweises auf die Patenterteilung:
19.09.90 Patentblatt 90/38

(84) Benannte Vertragsstaaten:
AT BE CH DE ES FR IT LI NL

(56) Entgegenhaltungen:
DE-A- 3 435 362
US-A- 2 811 098
US-A- 2 935 011
US-A- 3 089 404
US-A- 3 361 052

(73) Patentinhaber: WMF WÜRTTEMBERGISCHE
METALLWARENFABRIK AG, Postfach 14 01,
D-7340 Geislingen/Steige(DE)

(72) Erfinder: Huber, Siegfried, Ing.grad., Freiheitstrasse 2/1,
D-7343 Kuchen(DE)
Erfinder: Motsch, Hans, Bergwiesenstrasse 25,
D-7340 Geislingen/Steige(DE)
Erfinder: Riegert, Hermann, Burren 10,
D-7341 Treffelhausen(DE)
Erfinder: Ritter, Rolf, Ing.grad.,
Oberböhringerstrasse 22,
D-7340 Geislingen/Steige(DE)
Erfinder: Schöll, Erwin, Strudelstrasse 34,
D-7343 Kuchen(DE)
Erfinder: Walter, Konrad, Dipl.-Ing. (FH),
Gartenstrasse 27, D-7901 Altheim/Alb(DE)
Erfinder: Wittlinger, Gerhard, Suttgarterstrasse 244-1,
D-7340 Geislingen/Steige(DE)

(74) Vertreter: Patentanwälte Grünecker, Kinkeldey,
Stockmair & Partner, Maximilianstrasse 58,
D-8000 München 22(DE)

## Beschreibung

Die Erfindung bezieht sich auf eine Kaffeemaschine der im Oberbegriff von Anspruch 1 erläuterten Art.

Eine derartige Kaffeemaschine ist aus der US-A 2 935 011 bekannt. Bei der bekannten Kaffeemaschine ist der Kolben senkrecht zur Heißwasserfließrichtung in der Brühkammer verschiebbar, um den verbrauchten Kaffeesatz nach Beendigung des Brühvorgangs auszustoßen. Darüber hinaus übernimmt der Kolben das Einschieben einer vorbestimmten Menge Kaffeemehl. Das Brühsieb und das Verteilsieb erstrecken sich jeweils um fast die Hälfte des Umfanges der Brühkammer und sind nur durch einen schmalen Steg voneinander isoliert. Mit dieser Ausgestaltung ist jedoch eine wirtschaftliche Ausnutzung des Kaffeemehls nicht möglich, weil der Großteil des Brühwassers den Weg des geringsten Widerstandes über den Randbereich nimmt und somit die in der Mitte angeordneten Kaffeekörner nicht ausreichend durchflossen werden. Darüber hinaus muß der Kolben während des Brühvorgangs immer eine einzige Stellung innerhalb der Brühkammer einnehmen, da ansonsten das Heißwasser hinter ihm unter Umgehung der Brühkammer hinwegfließen würde. Es ist eine Dosiervorrichtung vorgesehen, die zwei Absperrschieber enthält. Zwar kann die eindosierte Menge des Kaffeemehls verändert werden, dies kann jedoch nur ab Werk geschehen, da auch das Zeitintervall der Betätigung der Dosierschieber verändert werden muß.

Eine weitere Kaffeemaschine, bei der eine Begrenzungsfläche der Brühkammer an einem Kolben angeordnet ist, ist der US-A 389 404 zu entnehmen. Aber auch mit dieser Maschine kann in einem einzigen Brühvorgang nur eine einzige Brühcharge mit einer einzigen, fest vorgegebenen Menge Kaffeemehl gebrüht werden.

Die US-A 3 361 052 beschreibt eine Kaffeemaschine, deren Brühvolumen durch Einsätze vergrößert bzw. verkleinert werden kann. Die Brühkammer besteht aus einem zylindrischen Brühgefäß mit kreisförmiger Grundfläche, die durch das Brühsieb gebildet wird. Auf dieses Brühsieb wird ein Filterpapier gelegt und das Kaffeemehl von Hand aufdosiert. Das Volumen des Brühgefäßes ist auf die größte Brühcharge ausgelegt. Sollen kleinere Mengen Kaffee gebrüht werden, so werden entweder in die Mitte oder vom Rand her Einsätze eingelegt, die das Volumen des Brühgefäßes verkleinern. Anschließend wird ein Heißwasser-Verteilsieb aufgelegt, das jedoch auf jeden Fall einen Abstand zum Kaffeemehl in der Brühkammer aufweisen muß. Dann wird das Brühgefäß in die Kaffeemaschine eingesetzt und der Brühvorgang kann beginnen. Mit den bekannten Einsätzen ist es jedoch nur möglich, das Volumen der Brühkammer stufenweise zu verändern, wobei nicht sichergestellt ist, daß die Schichtdicke des Kaffeemehls bei jeder eindosierten Menge des Kaffeemehls immer gleich ist. Bedingt durch den die gewünschte Schichtdicke übersteigenden Abstand zwischen dem Verteilsieb und dem Brühsieb können außerdem auch ungleichmäßige Eindosierungen nicht ausgeglichen werden.

Darüber hinaus sind auswechselbare Einsätze für selbsttätig arbeitende Kaffeemaschinen mit selbsttätiger Eindosierung des Kaffeemehls unbrauchbar, da der relativ hohe Zeitaufwand für das Auswechseln der Einsätze die Abstände zwischen zwei aufeinander folgenden Brühvorgängen unzulässig vergrössern würde.

Eine zum Aufbrühen unterschiedlich großer Brühchargen aus unterschiedlich großen, selbsttätig eindosierten Kaffeemehlmengen verwendete Kaffeemaschine ist aus der DE-PS 2 657 355 bekannt. Bei der bekannten Kaffeemaschine ist die Brühkammer zylindrisch ausgebildet und weist im Deckel unter anderem eine verschließbare Einfüllöffnung für das Kaffeemehl und eine Heißwasser-Zuführleitung auf. Über dem konisch ausgebildeten Boden der Brühkammer erstreckt sich ein ringförmiges Filtersieb, auf das das Kaffeemehl in einer Schicht abgelagert wird. Der Querschnitt der Brühkammer ist im wesentlichen oberhalb des Filtersiebes über die gesamte Höhe der Brühkammer konstant und unveränderlich. Wenn mit einer derartigen Brühkammer unterschiedlich große Brühchargen aufgebrüht werden sollen, so wird eine unterschiedlich große Menge Kaffeemehl in die Brühkammer eingefüllt. Dadurch ergeben sich jedoch unterschiedlich dicke Kaffeeschichten auf dem Filtersieb. Soll beispielsweise lediglich eine einzige Tasse gebrüht werden, so ist die Kaffeemehlschicht relativ dünn. Dadurch läuft jedoch auch das heiße Wasser relativ schnell hindurch, so daß ein qualitätsmäßig nicht befriedigender Kaffee entsteht. Andererseits wird die Durchlaufzeit des heißen Wassers durch das Kaffeemehl stark verlängert, wenn für eine große Brühcharge, beispielsweise für eine Literkanne, eine große Menge Kaffeemehl eindosiert werden muß. Das Problem der schlechten Qualität einer Tassencharge wurde in der Praxis dadurch gelöst, daß das Kaffeemehl überdosiert, d.h. mehr Kaffeemehl eindosiert wurde, als eigentlich bei optimaler Ausnutzung des Kaffeemehles notwendig wäre. Wenn eine größere Anzahl von Tassen einzeln gebrüht werden soll, ist dieses Vorgehen jedoch relativ unwirtschaftlich. Die lange Durchlaufzeit bei größeren Chargen mußte darüber hinaus in Kauf genommen werden.

Der Erfindung liegt somit die Aufgabe zugrunde, eine Kaffeemaschine der genannten Art auf konstruktiv einfache Weise derart auszugestalten, daß ein qualitätsmäßig befriedigender Kaffee in unterschiedlich großen Brühchargen bereitgestellt werden kann, ohne daß Kaffeemehl überdosiert oder eine unverhältnismäßig lange Durchlaufzeit in Kauf genommen werden muß.

Die Aufgabe wird erfindungsgemäß durch die kennzeichnenden Merkmale des Anspruches 1 gelöst.

Durch die erfindungsgemäße Ausgestaltung kann der Brühquerschnitt der Brühkammer derart auf die einzusetzende Kaffeemehlmenge abgestimmt werden, daß das heiße Wasser bei jeder Brühcharge etwa den gleichen Weg durch das Kaffeemehl zurücklegen muß. Je nachdem, ob mehr Wert auf eine vollständige Kaffeeauslegung oder eine extrem kurze Zubereitungszeit gelegt wird, wird der Abstand zwischen dem Verteil- und dem Brühsieb größer oder kleiner als 20 mm, insbesondere zwischen 10 und 30 mm gewählt.

Die Ansprüche 2 und 3 beschreiben alternative Querschnitte der Brühkammer.

Der Querschnitt nach Anspruch 3 kann in der in Anspruch 4 angegebenen Richtung durchflossen werden, wobei sich eine gegenüber der Verteilfläche für das Heißwasser relativ verkleinerte Brühsiebfläche ergibt. Dadurch wird die Eigenfiltration des Kaffeemehls verbessert. Kleine Kaffeemehlpartikelchen setzen sich vor die Löcher des Brühsiebes, wodurch nur wenig Schlammanteil vom Kaffeepulver in das Getränk fließen kann. Trotz dieser relativ kleinen Brühsiebfläche wird die gesamte Kaffeemehlmenge vom Wasser durchflossen; tote Winkel oder Ecken, die vom Brühwasser bei seinem Lauf vom Verteilersieb zum Brühsieb nicht oder nur unzureichend erreicht werden, treten nicht auf. Aber auch bei entgegengesetzter Fließrichtung (Anspruch 13) ergibt sich eine ausgezeichnete und gleichmäßige Brühwirkung, so daß diese in vielen Fällen zu bevorzugen ist.

Durch die Ausgestaltung nach Anspruch 6 kann das Brühsieb aus der Brühkammer zurückgezogen werden, wenn Kaffeemehl eingefüllt wird. Vor Beginn des Brühvorganges wird dann der Kolben wieder nach oben geschoben, wodurch die Kaffeemehleinfüllung vergleichmäßigt und in gewissem Sinne bereits vorverdichtet wird.

Anspruch 6 beschreibt eine besonders bevorzugte Ausgestaltung des Brühsiebes, bei dem ein Feinsieb mit Mikroöffnungen zum Abfiltern des Kaffees verwendet werden kann, so daß auch ohne Verwendung von Papierfiltern oder dergleichen kein Kaffeemehl durchtreten kann. Feinsiebe mit Mikroöffnungen müssen jedoch relativ dünn sein, damit sich im Inneren der Sieböffnung keine Kaffeemehlpartikel dauernd festsetzen können. Durch ihre relative Dünne sind sie jedoch konstruktiv nicht sehr widerstandsfähig. Wenn jedoch ein Stützsieb verwendet wird, das größere, den Kaffeedurchlauf nicht bremsende Sieböffnungen aufweist, und, dadurch bedingt, auch dicker ausgeführt werden kann, so können mikroporöse Feinsiebe für den vorliegenden Verwendungszweck ohne weiteres eingesetzt werden. Derartige mikroporöse Feinsiebe sind bekannt und beispielsweise in der US-PS 4 694 737 der Anmelderin beschrieben.

Durch die Ausgestaltung nach Anspruch 7 wird beim Verschieben der Begrenzungsflächen möglicherweise ungleichmäßig verteiltes Kaffeemehl im Querschnitt etwa konstant verdichtet.

Die Anordnung der Brühkammer in einem Zylinder und der Begrenzungsfläche an einem Kolben nach Anspruch 8 stellt eine besonders einfache und zweckmäßige konstruktive Lösung für die erfindungsgemäße Ausgestaltung der Brühkammer dar.

Durch die Ausgestaltung nach Anspruch 9 kann die Beladung der Brühkammer mit Kaffeemehl an der der Begrenzungsfläche gegenüberliegenden Seite der Brühkammer erfolgen.

Durch die Ausgestaltung nach Anspruch 10 kann der Brühvorgang beim Brühen von kleinen Kaffeemengen verbessert werden. Verläuft der Konus nach außen, so wird das Aufbrühen von insbesondere normalem Kaffee verbessert, da dadurch eine größere Brühsiebfläche zur Verfügung steht, und somit der Kaffee schneller abgezogen werden kann. Besonders zweckmäßig ist die Vergrößerung der Brühsiebfläche dann, wenn, um die Ausnutzung des Kaffeemehls zu verbessern, der Durchmesser der Brühkammer relativ groß gewählt wird, so daß sich bei einer kleinen Menge Kaffeemehl für eine Tasse eine nur geringe Füllhöhe im Vergleich zum Abstand zwischen Brühsieb und Heißwasser-Verteilsieb ergibt. Verläuft der Konus jedoch nach innen geneigt, so daß die Brühsiebfläche verkleinert wird, so wird das Aufbrühen von kleinen Mengen Espresso verbessert, da die Eigenfiltrationswirkung des Kaffeemehls erhöht wird.

Die Ansprüche 11 und 12 beschreiben besonders bevorzugte Brühsiebe, insbesondere in der beschriebenen Kaffeemaschine. Durch progressiv oder stufenweise Änderung der Größe der Sieböffnungen können unterschiedliche Filtrations- bzw. Abzugsgeschwindigkeiten für den Kaffee für unterschiedliche Mengen an Kaffeemehl eingestellt werden, wobei die relativ großen Sieböffnungen zusätzlich für große Brühchargen und die relativ kleinen Sieböffnungen ausschließlich für kleine Brühchargen zur Anwendung kommen.

Ausführungsbeispiele der Erfindung werden nachfolgend anhand der Zeichnungen näher erläutert. Es zeigen:

Fig. 1 einen schematischen Längsschnitt durch die wesentlichsten Teile der erfindungsgemäßen Kaffeemaschine,

Fig. 2 eine schematische Darstellung der verschiedenen Schwenkstellungen der Brühkammer nach Fig. 1,

Fig. 3 einen vergrößerten Schnitt III–III aus Fig. 1,

Fig. 4 einen abgewandelten Querschnitt der Brühkammer,

Fig. 5 einen bevorzugten Querschnitt eines weiteren Ausführungsbeispieles der Brühkammer, und

Fig. 6 den Schnitt VII–VII aus Fig. 5.

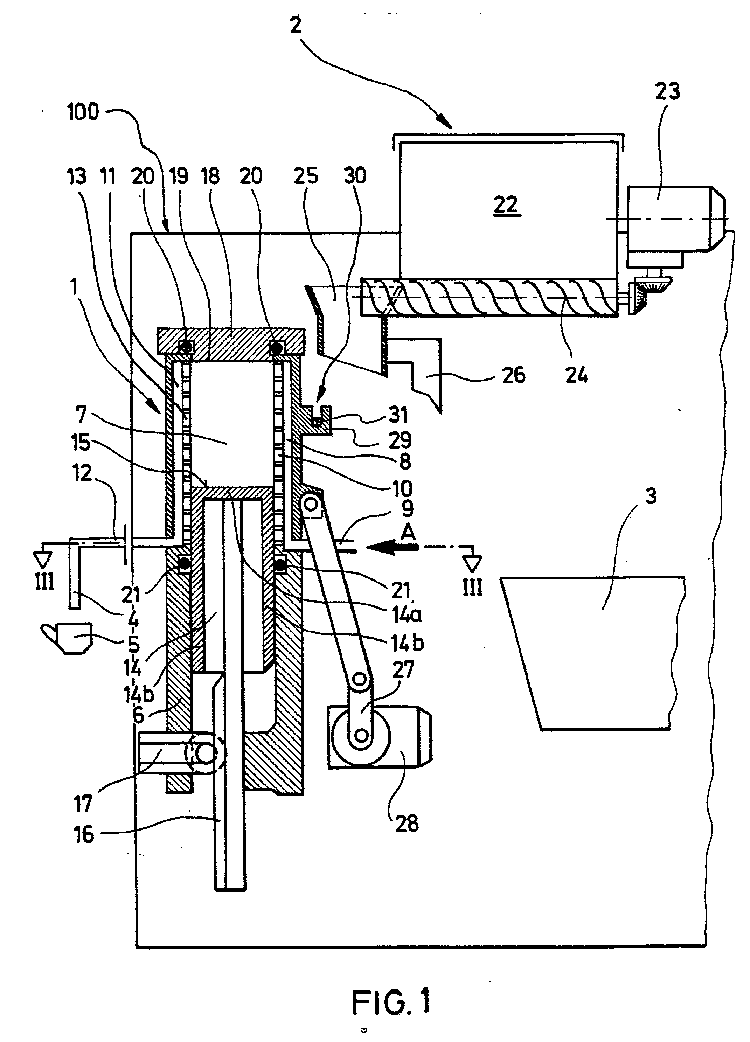

Aus Fig. 1 ist in teilweise geschnittener und schematischer Darstellung eine Kaffeemaschine 100 ersichtlich, von der jedoch nur die für die vorliegende Erfindung wesentlichen Bauteile gezeigt sind. Die weiteren für den Betrieb einer Kaffeemaschine notwendigen und wünschenswerten Bauteile, wie Heißwasserbereiter, Steuerung usw., sind in der im Stand der Technik üblichen Weise ausgebildet, so daß auf ihre Darstellung verzichtet werden kann. Die Kaffeemaschine 100 weist eine Brüheinrichtung 1, eine Zufuhreinrichtung 2 für Kaffeemehl, ein Abfallgefäß 3 für den verbrauchten Kaffeesatz und einen aus der Kaffeemaschine ausmündenden, in verkleinertem Maßstab dargestellten Auslaufstutzen 4 zum Füllen von Kaffeegefäßen, wie beispielsweise eine Tasse 5, auf.

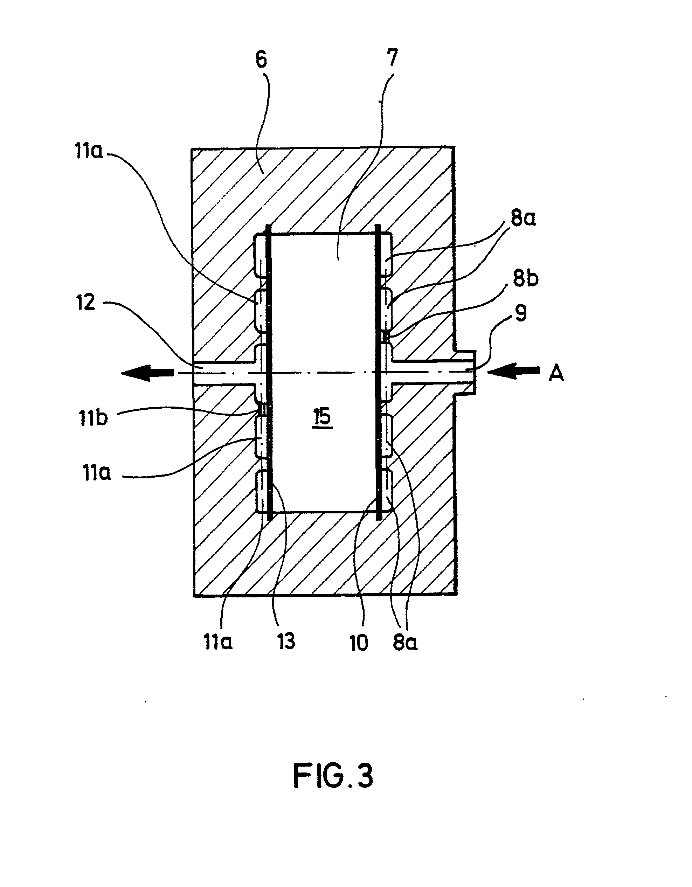

Die Brüheinrichtung 1 enthält einen prismatischen Zylinder 6, der in Fließrichtung A des Heißwassers den in Fig. 3 dargestellten rechteckigen Querschnitt aufweist und in Fig. 1 mit senkrechter Längsachse stehend angeordnet ist.

Im oberen Bereich des Zylinders 6 ist eine Brühkammer 7 ausgebildet. In einer der senkrechten Seitenwandungen des Zylinders 6 erstreckt sich über den gesamten Bereich der Brühkammer 7 eine Verteilkammer 8, der an ihrem unteren Ende über eine als Schlauch ausgebildete Zulaufleitung 9 in Richtung des Pfeiles A heißes Wasser zum Aufbrühen des Kaffees zugeführt wird. Die Verteilkammer 8 ist von der Brühkammer 7 durch ein Verteilersieb 10 getrennt, das das Einschwemmen von Kaffeepartikeln in die Verteilkammer 8 verhindert und für eine gleichmäßige Verteilung des heißen Wassers sorgt. In der der Verteilkammer 8 gegenüberliegenden senkrechten Seitenwand des Zylinders 6 ist eine Getränksammelkammer 11 angeordnet, die sich ebenfalls über die gesamte Höhe der Brühkammer 7 erstreckt. Die Getränksammelkammer 11 ist an ihrem unteren Ende über eine als Schlauch ausgebildete Ablaufleitung 12 mit dem Auslaufstutzen 4 verbunden. Die Getränksammelkammer 11 ist mit der Brühkammer 7 über ein Brühsieb 13 verbunden, das parallel zum Verteilersieb 10 in einem Abstand zu ihm angeordnet ist, der der optimalen Dicke der Kaffeemehlschicht entspricht und bei etwa 20 mm, bevorzugt zwischen 10 und 30 mm, liegt.

Im Inneren des Zylinders 6 ist von unter her ein Kolben 14 gleitend geführt. Der Kolben 14 hat einen rechteckigen, an den Innenquerschnitt des Zylinders 6 angepaßten Querschnitt mit einer oberen Begrenzungswand 14a und mindestens zwei sich senkrecht nach unter erstreckenden, seitlichen Begrenzungswänden 14b. Damit bildet die der Brühkammer 7 zugewandte freie Oberfläche der waagerechten Begrenzungswand 14a die untere Begrenzungsfläche 15 für die Brühkammer. Eine der Seitenwände 14b ist an der der Verteilkammer 8 zugewandten Seite und die andere der Seitenwände 14b an der der Getränksammelkammer 11 zugewandten Seite des Kolbens 14 angeordnet. Die Seitenwände 14b sind bevorzugt so groß, das sie das Verteilersieb 10 bzw. das Brühsieb 13 vollständig überdecken können. Der Kolben 14 ist mit einer Kolbenstange 16 verbunden, die als Zahnstange ausgebildet ist. In die Zahnstange 16 greift ein Antriebsrad eines Getriebemotors 17 ein, der den Kolben 14 im Inneren des Zylinders 6 derart verschiebt, daß die Begrenzungsfläche 15 von mindestens dem unteren Ende des Verteilersiebes 10 bzw. des Brühsiebes 13 bis zum oberen Ende des Zylinders 6 bzw. darüber hinaus bewegt werden kann.

Die Brühkammer 7 ist an der der Begrenzungfläche 15 gegenüberliegenden Seite mit einem an der Kaffeemaschine festgelegten Deckel 18 verschlossen, der mit einem Ansatz 19 etwas in das Innere des Zylinders 6 hineinreicht und mittels Dichtungen 20 gegen den Zylinder 6 abgedichtet ist. Auch der Kolben 14 läuft über Dichtungen 21, so daß die Brühkammer 7 oben und unten flüssigkeitsdicht abgeschlossen ist.

Die Zufuhreinrichtung 2 enthält in üblicher Weise einen Vorratsbehälter 22 für das Kaffeemehl, eine durch einen Motor 23 angetriebene Dosierschnecke 24, die im unteren Teil des Vorratsbehälters 22 angeordnet ist und über einem Einfülltrichter 25 mündet. Der Einfülltrichter 25 ist, wie Fig. 1 zeigt, nicht senkrecht über der Brüheinrichtung 1 angeordnet, sondern leicht seitlich versetzt. Es ist weiterhin ein Abstreifer 26 vogesehen, dessen Funktion weiter unten näher erläutert wird.

Die Zylinder-Kolbeneinheit 6 bzw. 14 ist schwenkbar und um einen gewissen Betrag vertikal bewegbar gelagert und zu diesem Zweck über eine Kurbel 27 mit einem Getriebemotor 28 verbunden. Am Zylinder 6 ist weiterhin hakenförmiges Teil 29 mit einer nach oben weisenden Kerbe 30 befestigt, die über einen gegen die Schwenkbewegung des Zylinders fixierten Lagesicherungsstift 31 geschoben werden kann. Am Zylinder 6 können weiterhin nicht gezeichnete Führungsstifte vorgesehen sein, die in fixierte, ebenfalls nicht gezeichnete Schlitz führungen in der Kaffeemaschine eingreifen und die Brüheinrichtung 1 während ihrer Verschwenkbewegung durch den Motor 28 auf den gewünschten Weg führen.

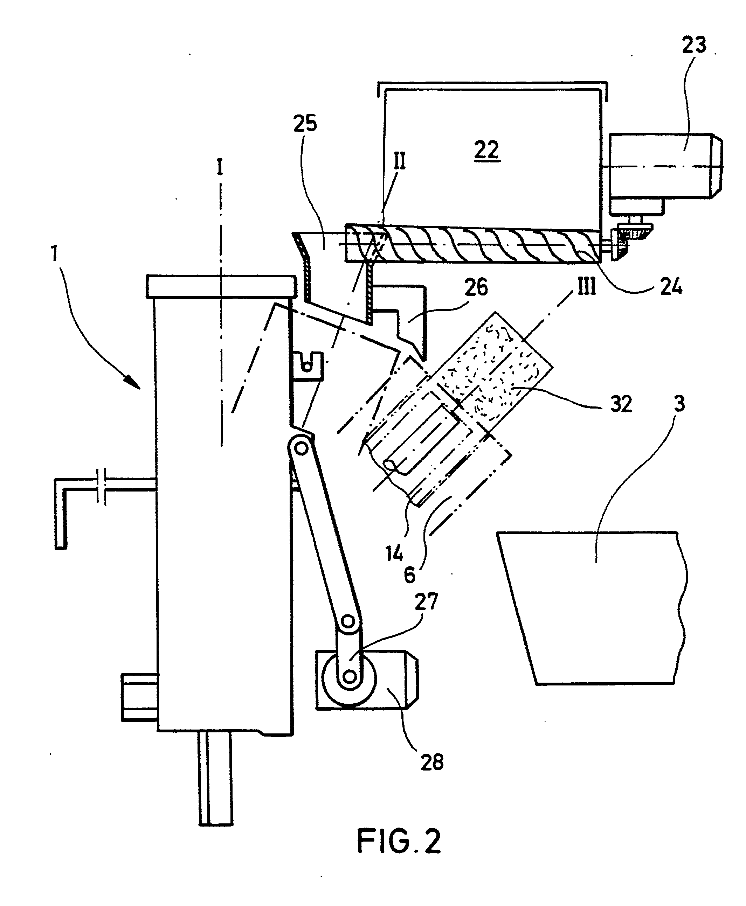

Die Verschwenkbewegung der Brüheinrichtung 1 ist in Fig. 2 näher dargestellt, wobei die Brühstellung mit I, die Befüllstellung mit II und die Reinigungsstellung der Brüheinrichtung 1 mit III bezeichnet wurde. Vor Beginn eines Brühvorganges ist der Kolben 14 im Inneren des Zylinders 6 zurückgezogen, wobei sich die Brüheinrichtung 1 in der Stellung II befindet. In dieser Stellung befindet sich die nicht durch den Deckel 18 verschlossene Brühkammer unterhalb des Einfülltrichters 25 der Zufuhreinrichtung 2. Die gewünschte Menge Kaffeemehl wird eindosiert und der Zylinder 6 in die Brühstellung I zurückgeschwenkt. Dabei wird der Zylinder 6 leicht angehoben, so daß der Lagesicherungsstift 31 in die Kerbe 30 und der Ansatz 19 des Deckels 18 in das Innere der Brühkammer 7 eintreten und die Dichtungen 20 ihre Wirkung entfalten können. Der Kolben 14 wird so weit hochgeschoben, bis das Kaffeemehl in der Brühkammer 7 vollständig eingeschlossen ist, wobei sich die Begrenzungsfläche 15 bei einer kleinen Kaffeemehlmenge in der Nähe des Deckels 18 und bei größeren Mengen in der Nähe der unteren Enden der Siebe 10 bzw. 13 befindet. Falls die Kaffeemaschine mit einer Zufuhrmöglichkeit von Heißwasser unter erhöhtem Druck ausgerüstet ist, kann diese Kolbenbewegung dazu benutzt werden, Kaffeemehl für Espressokaffee in üblicher Weise zu verdichten. Bei jeder Menge hat jedoch das aus der Verteilkammer 8 austretende heiße Wasser bis zur Getränksammelkammer 11 den gleichen Weg durch das Kaffeemehl zurückzulegen, wobei dieses sowohl bei der kleinsten Brühcharge als auch bei der größten Brühcharge voll ausgenutzt wird und wobei sich bei jeder Brühcharge im wesentlichen die gleiche, relativ kurze Durchlaufzeit ergibt. Befindet sich die Begrenzungsfläche 15 nicht am unteren Ende der Siebe 10 bzw. 13, so werden die außerhalb der verkleinerten Brühkammer 7 liegenden, nicht benötigten Sieböffnungen durch die als Abdeckschieber wirkenden Seitenwandungen 14b des Kolbens 14 überdeckt. Damit wird sicherge stellt, daß das heiße Wasser nur über den sich zwischen der Begrenzungsfläche 15 und dem Deckel 18 befindenden Brühquerschnitt der Brühkammer 7 eintreten und das fertige Getränk über diesen Querschnitt auch wieder austreten kann. Beim Brühen von Kaffee wird die gewünschte Menge heißes Wasser über die Zulaufleitung 9 in Richtung des Pfeiles A in die Verteilkammer 8 eingeleitet, tritt durch die Öffnungen des Verteilersiebes 10 hindurch, wird durch das Kaffeemehl in die Brühkammer 7 geleitet und laugt dieses aus. Der fertige Kaffee gelangt durch die Öffnungen des Brühsiebes 13 in die Getränksammelkammer 11 und von dort über die Ablaufleitung 12 und den Auslaufstutzen 4 in das untergestellte Gefäß.

Ist die vorbestimmte Menge heißes Wasser durchgelaufen und der Brühvorgang beendet, so wird der Zylinder 6 abgesenkt und kommt somit vom Ansatz 19 des Deckels 18 und vom Lagesicherungsstift 31 frei. Dann wird der Zylinder 6 in die in Fig. 2 gezeichnete Schräglage der Reinigungsstellung III gekippt und der Kolben 14 hochgefahren. Dadurch wird der ausgelaugte Kaffeesatz 32 aus dem Zylinder 6 ausgestoßen und fällt in das Abfallgefäß 3, von wo er entfernt werden kann. Diese Anordnung hat außerdem den Vorteil, daß der Kaffeesatz nicht in die Kanalisation gelangt, wo er Probleme aufwerfen kann.

Der Kolben 14 bleibt beim Zurückschwenken des Zylinders 6 in seiner oberen Stellung, in der er entweder mit der Oberkante des Zylinders 6 abschließt oder leicht über diese vorsteht. Die Begrenzungsfläche 15 kommt somit beim Zurückschwenken des Zylinders 6 mit dem Abstreifer 26 in Berührung, der die letzten Reste des Kaffeesatzes von der Begrenzungsfläche 15 abschabt. Befindet sich dann der Zylinder 6 wieder in seiner Befüllstellung II, wird der Kolben 14 zurückgefahren und die Brühkammer 7 mit einer weiteren Portion Kaffeemehl für den nächsten Brühvorgang beschickt.

Fig. 3 zeigt einen Querschnitt durch den Zylinder 6, wobei der Kolben 14 soweit zurückgezogen ist, daß sich die Begrenzungsfläche 15 an ihrer unteren Endstellung befindet. Dabei steht das Verteilersieb 10 und das Filtersieb 13 über die gesamte Höhe mit der Brühkammer 7 in Verbindung. Wie aus der Figur ersichtlich, besteht die Verteilkammer 8 aus einer Mehrzahl von Verteilkanälen, die sich parallel zur Längsachse des Zylinders 6 hinter dem Verteilersieb 10 erstrecken. Die Kanäle 8a sind untereinander durch Querkanäle 8b verbunden. Durch eine zweckmäßige Anordnung der Kanäle 8b wird sichergestellt, daß das über die Zulaufleitung 9 eintretende heiße Wasser über den gesamten Brühquerschnitt verteilt wird.

Analog ist die Getränkesammelkammer mit einer Vielzahl von sich parallel erstreckenden Kanälen 11a versehen, die untereinander durch Verbindungskanäle derart verbunden sind, daß das Getränk über den gesamten Brühquerschnitt gleichmäßig abgezogen werden kann. Das Getränk aus der Sammelkammer gelangt dann in die Ablaufleitung 12.

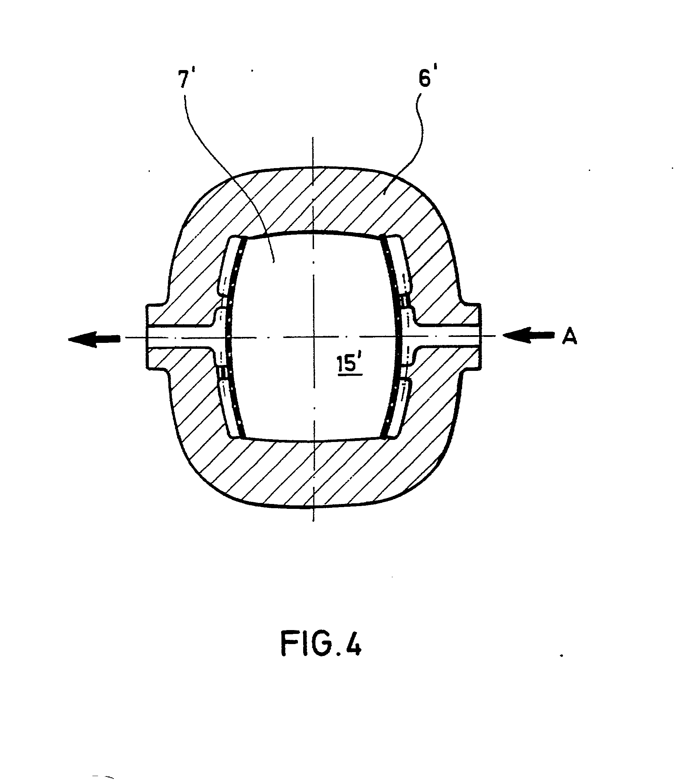

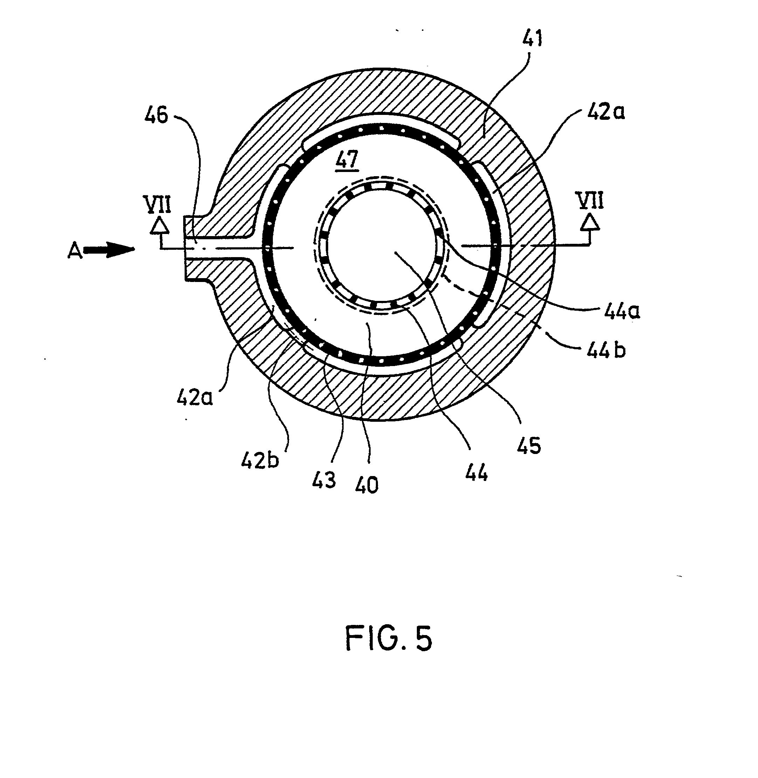

In den Figuren 4 und 5 sind alternative Querschnitte des Zylinders 6 und der Begrenzungsflächen 15 in der Fließrichtung A dargestellt. Fig. 4 zeigt einen angenähert rechteckigen Querschnitt, wobei jedoch die Brühkammer 7' des Zylinders 6' von kissenartig nach außen gewölbten Begrenzungswänden umgeben ist und eine analog geformte verstellbare Begrenzungsfläche 15' aufweist.

Fig. 5 zeigt einen Querschnitt durch ein weiteres Ausführungsbeispiel einer Brühkammer 40, die im Inneren eines Kreiszylinders 41 angeordnet ist. Über den gesamten Innenumfang des Zylinders 41 verteilt sind längs verlaufende Heißwasserverteilkammern 42a vorgesehen, die in bereits beschriebener Weise über Verbindungskanäle 42b miteinander verbunden sind. Die Verteilkammern 42a und die Verbindungskanäle 42b sind durch ein als Verteilersieb dienendes rohrförmiges Sieb 43 abgedeckt. Koaxial im Inneren des rohrförmigen Siebes 43 ist ein zweites als Brühsieb dienendes rohrförmiges Sieb 44 angeordnet, dessen Durchmesser um den zweifachen Betrag der gewünschten Dicke der Kaffeemehlschicht reduziert ist. Das rohrförmige Sieb 44 weist ein inneres Stützsieb 44a auf, das mit relativ großen, die Abmessungen der Kaffeemehlpartikel übersteigenden Sieböffnungen versehen ist. Die der Brühkammer 40 zugewandte Außenseite des Stützsiebes 44a bedeckt ein Feinsieb 44b, das beispielsweise aus einer dünnen Metallfolie mit geätzten Mikrolöchern oder einem übergestülpten Schlauch aus Nylongewebe bestehen kann. Die Sieböffnungen des Feinsiebes 44b sind selbstverständlich kleiner als die Kaffeemehlpartikel. Das Brühsieb 44 umschließt eine Getränkesammelkammer 45. Wie bereits angedeutet, tritt das heiße Wasser in Richtung des Pfeiles A über einen Zulauf 46 in die Verteilkammern 42 am Innenumfang des Zylinders 41 ein und gelangt durch das Verteilersieb 43 in die durch die, analog der Begrenzungsfläche 15 ausgebildete, ringförmige Begrenzungsfläche 47 begrenzte Brühkammer 40. Das fertige Getränk verläßt die Brühkammer 40 nach Durchtritt des Brühsiebes 44 über die Getränkesammelkammer 45 durch die Mitte der Begrenzungsfläche 47. Es ist jedoch auch eine umgekehrte Fließrichtung, von inne nach außen, denkbar, wobei das an der Innenwandung des Zylinders anliegende Sieb als Brühsieb ausgebildet ist.

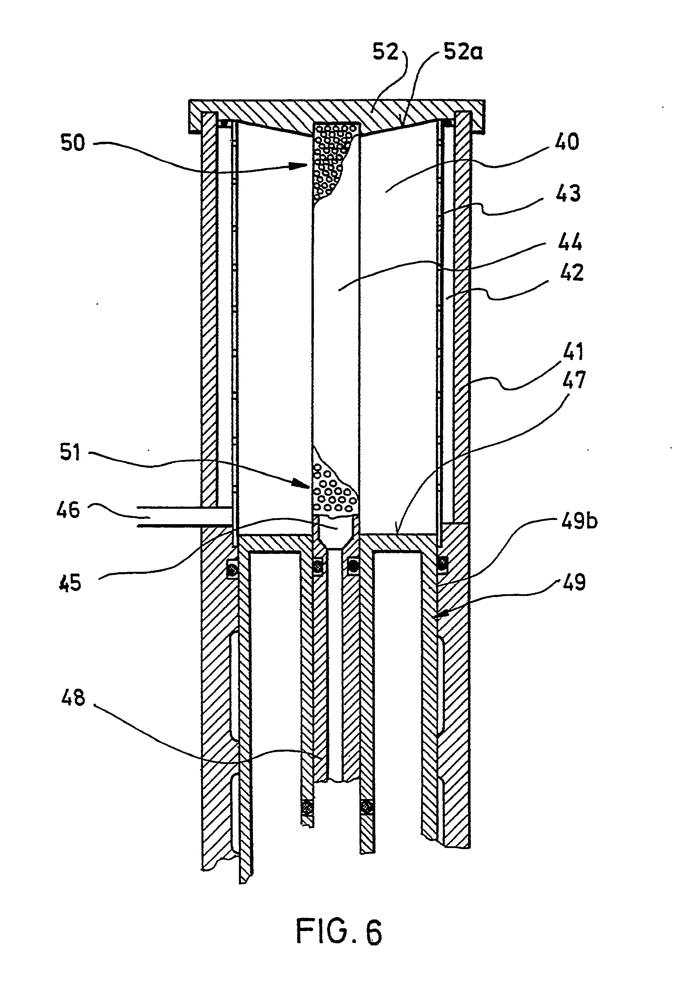

Fig. 6 zeigt einen Längsschnitt durch ein mögliches Ausführungsbeispiel gemäß Fig. 5. In diesem Ausführungsbeispiel ist die Getränkesammelkammer 45 und das Brühsieb 44 an einem Siebkolben 48 angeordnet, der im Inneren eines Kolben 49 abgedichtete gleitend geführt ist. Der Kolben 49 ist analog des Kolben 14 als Abdeckschieber 49b ausgebildet und im Inneren des Zylinders 41, ebenfalls abgedichtet, geführt. Auf diese Weise kann der Siebkolben 48 vor dem Einfüllen des Kaffeemehls in die Brühkammer 40 in das Innere des Kolbens 49 zurückgezogen werden, so daß zunächst die Brühkammer 40 einen im wesentlichen kreisförmigen Querschnitt aufweist. Ist die gewünschte Menge Kaffeemehl eingefüllt, so wird, gleichzeitig oder unabhängig von der Bewegung des Kolbens 49, der Siebkolben 48 bis zum Anschlag am Deckel 52 eingeschoben, so daß das Kaffeemehl nochmals bewegt wird und sich etwa ungleichmäßig eingefülltes Kaffeemehl in seiner Packdichte homogenisieren kann. Wenn der Kolben 49 bereits in der gewünschten, der jeweiligen Brühcharge angepaßten Position steht, so wird durch das Einfahren des Siebkolbens 48 eine zusätzliche Verdichtung erreicht.

Eine weitere Abhandlung des Brühsiebes ist anhand Fig. 6 gezeichnet, kann jedoch in allen Ausführungsformen vorgesehen werden. Das Brühsieb 44 weist, wie die Anschnitte zeigen, in seinen oberen Bereich 50 Sieböffnungen geringeren Durchmessers auf, als in seinem unteren, der Begrenzungsfläche 47 benachbarten Bereich 51. Die Größe der Sieböffnungen kann sich über die axiale Länge des Siebkolbens 48 stufenweise oder kontinuierlich ändern. Weiterhin können im Bereich 50 die kleinern Sieböffnungen zahlreicher sein als die größeren Sieböffnungen im Bereich 51, so daß es möglich ist, trotz der unterschiedlichen Größen der Sieböffnungen den Gesamt-Durchflußquerschnitt über den gesamten Siebkolben 48 im wesentlichen konstant zu halten.

Eine weitere Abwandlung, die in analoger Weise bei allen Ausführungsbeispielen vorgesehen werden kann, betrifft eine Ausgestaltung des Deckels 52. Die am Deckel 52 angeordnete Begrenzungsfläche 52a der Brühkammer 40 verläuft konisch in Richtung auf das Brühsieb 44, wodurch die Fläche des Brühsiebes, entweder durch das gezeichnete teilweise Abdecken oder durch ein nicht vollständiges Einschieben des Siebkolbens, verkleinert wird, was sich prozentual insbesondere bei kleineren Brühmengen auswirkt. Für größere Brühmengen ist die Verkleinerung prozentual zu klein, um ins Gewicht zu fallen. Auf diese Weise wird beispielsweise zum Brühen von Espresso die Eigenfiltrationswirkung des Kaffees erhöht, wodurch die Qualität des Espressos in kleinen Portionen erhöht wird.

Soll nur normaler Kaffee bereitet werden, so kann die Richtung des Konus der Begrenzungsfläche 52a umgekehrt werden, so daß die Fläche des Brühsiebes im Vergleich zur Fläche des Verteilsiebes erhöht wird, was sich jedoch wiederum prozentual nur für kleine Kaffeemengen auswirkt.

Eine weitere Ausgestaltung, die bei allen Ausführungsbeispielen vorhanden sein kann, betrifft den Kolben 49 mit der Begrenzungsfläche 47. Die Begrenzungsfläche 47 kann elastisch verformbar ausgebildet oder mit einem dementsprechenden verformbaren Kissen oder sonstiger Verlängerung versehen werden. Auf diese Weise können unterschiedlich große Verdichtungen bei Einfüllschwankungen oder schlechter Kaffeemehlverteilung vermieden werden.

Die Ausgestaltung nach den Fig. 5 und 6 beinhaltet weiterhin die Möglichkeit, den Durchmesser des Brühsiebs 44 klein gegenüber dem Durchmesser des Verteilsiebes 43 auszubilden, wie beispielsweise in Fig. 6 (in Vergleich zu Fig. 5) gezeigt. Dadurch wird wiederum die Brühsiebfläche herabgesetzt, so daß zwangsläufig die Eigenfiltrationswirkung des Kaffeemehls verstärkt zum Einsatz kommt. Auf diese Weise ist es möglich, für das Brühsieb anstelle von Mikrofeinsieben auch ein Sieb mit relativ großen Sieböffnungen im Bereich von etwa 0,2 bis 0,8 mm zu verwenden, ohne daß Kaffeemehlpartikel in das fertige Getränk gelangen.

In Abwandlung der beschriebenen und gezeichneten Ausführungsbeispiele können die anhand der einzlenen Zeichnungen erläuterten Einzelheiten untereinander ausgetauscht werden. Es können weiterhin verschiedene Querschnitte, wie beispielsweise ein quadratischer oder ein ovaler Querschnitt, verwendet werden. Die Brüheinrichtung muß nicht unbedingt als Zylinder-Kolben-Einheit ausgebildet sein; die verstellbare Begrenzungsfläche kann vielmehr auch an einen Schieber angeordnet werden. Die Brüheinrichtung kann ebenso stationär und/oder in Brühstellung waagerecht angeordnet sein, wobei die Reinigung auf übliche Weise durch Ausspülen erfolgt. Für die Siebe können beispielsweise Siebe mit runden oder schlitzförmigen Sieböffnungen bzw. mit einer Kombination aus beiden eingesetzt werden. Der in Fig. 6 gezeichnete Konus kann, wenn das Abstreifen des Kaffeesatzes sichergestellt ist, auch an der Begrenzungsfläche angeordnet werden. Schließlich ist es möglich, beispielsweise die Verteilkammern für das Heißwasser dadurch zu bilden, daß einstückig an das Verteilsieb Stege angeformt werden, die das Verteilsieb in dem gewünschten Abstand zur Zylinderwandung halten. Ein solches Bauteil kann in einfacher Weise aus Kunststoff geformt werden.

**Patentansprüche**

1. Kaffeemaschine mit einer Brühkammer (7, 7', 40), die einen Heißwassereinlaß mit einem Verteilsieb (10, 43) und einen dem Heißwassereinlaß gegenüberliegenden Getränkeauslaß mit einem Brühsieb (13, 44) aufweist, und mit einem quer zur Heißwasserfließrichtung in der Brühkammer (7, 7', 40) verschiebbaren Kolben (14, 49), der mit einer Begrenzungsfläche (15, 15', 47) der Brühkammer (7, 7', 40) versehen ist, wobei in die Brühkammer (7, 7', 40) selbsttätig Kaffeemehl eindosierbar ist, dadurch gekennzeichnet, daß beim Eindosieren unterschiedlich großer Mengen Kaffeemehl zum Brühen unterschiedlich großer Brühchargen Kaffee die Begrenzungsfläche (15, 15', 47) des Kolbens (14, 49) unterschiedlich weit in die Brühkammer (7, 7', 40) einschiebbar ist, so daß die Dicke der Kaffeemehlschicht in Fließrichtung des Heißwassers bei den unterschiedlich großen Mengen Kaffeemehl im wesentlichen konstant ist, daß das Brühsieb (13, 44) und das Verteilsieb (10, 43) mit einem der Dicke der Kaffeemehlschicht entsprechenden, über den Querschnitt der Brühkammer (7, 7', 40) im wesentlichen konstanten Abstand zueinander angeordnet sind, und daß zum Abdecken der nicht benötigten Sieböffnungen des Brühsiebes (13, 44) bzw. des Verteilsiebes (10, 43) eine Seitenwand (49b) des Kolbens (14, 49) als Abdeckschieber ausgebildet ist.

2. Kaffeemaschine nach Anspruch 1, dadurch gekennzeichnet, daß die Brühkammer (7, 7') in der Fließrichtung des Heißwassers einen im wesentlichen rechteckigen Querschnitt aufweist.

3. Kaffeemaschine nach Anspruch 1, dadurch gekennzeichnet, daß die Brühkammer (40) in der Fließrichtung des Heißwassers einen ringförmigen Querschnitt aufweist.

4. Kaffeemaschine nach Anspruch 3, dadurch gekennzeichnet, daß sich der Heißwassereinlaß (42) durch die äußere und der Getränkeauslaß (45) durch die innere Ringwandung erstreckt.

5. Kaffeemaschine nach Anspruch 3 oder 4, dadurch gekennzeichnet, daß die innere Ringwandung als Siebkolben (48) ausgebildet und relativ zur Begrenzungsfläche 47) verschiebbar ist.

6. Kaffeemaschine nach einem der Ansprüche 1 bis 5, dadurch gekennzeichnet, daß das Brühsieb (13, 44) ein Stützsieb (44a) mit einer der Abmessungen der Kaffemehlpartikel übersteigenden Größe der Sieböffnung und ein auf dem Stützsieb (44a) an der der Brühkammer (40) zugewandten Seite angeordnetes Feinsieb (44b) mit einer unter den Abmessungen der Kaffeemehlpartikel liegenden Größe der Sieböffnungen aufweist.

7. Kaffeemaschine nach einem der Ansprüche 1 bis 6, dadurch gekennzeichnet, daß die Begrenzungsfläche (15, 15', 47) in Richtung senkrecht zur Fließrichtung elastisch nachgiebig ausgebildet ist.

8. Kaffeemaschine nach einem der Ansprüche 1 bis 7, dadurch gekennzeichnet, daß die Brühkammer (7, 7', 40) in einem in Brühstellung im wesentlichen senkrecht stehenden Zylinder (6, 41) angeordnet ist, in dem der mit der im wesentlichen waagerecht angeordneten Begrenzungsfläche (15, 15', 47) und dem Abdeckschieber (14b, 49b) versehene Kolben (14, 49) gleitend geführt ist.

9. Kaffeemaschine nach Anspruch 8, dadurch gekennzeichnet, daß die Brühkammer (7, 7', 40) im Zylinder (6, 41) an der der verstellbaren Begrenzungsfläche (15, 15', 47) gegenüberliegenden Seite durch einen lösbaren Deckel (18, 52) verschlossen ist.

10. Kaffeemaschine nach Anspruch 9, dadurch gekennzeichnet, daß die Begrenzungsfläche (15, 15', 47) oder, bevorzugt, der Deckel (18, 52) an der der Brühkammer (7, 7', 40) zugewandten Seite (19, 52a) konisch verläuft.

11. Brühsieb zur Verwendung in einer Brühkammer mit einer verstellbaren Begrenzungsfläche, für eine Kaffeemaschine, insbesondere nach einem der Ansprüche 1 bis 10, dadurch gekennzeichnet, daß die Größe der Sieböffnungen von einem Endbereich (50) in Richtung auf den anderen Endbereich (51) des Siebes zunimmt.

12. Brühsieb nach Anspruch 11, gekennzeichnet durch einen zwischen dem Endbereichen (50, 51) im wesentlichen konstanten Gesamt-Durchflußquerschnitt der Sieböffnungen.

13. Kaffeemaschine nach Anspruch 3, dadurch gekennzeichnet, daß sich der Heißwassereinlaß durch die innere und der Getränkeauslaß durch die äußere Ringwandung erstrecken, wobei ein an der Innenfläche der äußeren Ringwandung anliegendes Brühsieb vorgesehen ist.

**Revendications**

1. Machine à café comprenant une chambre d'ébullition (7, 7', 40) qui présente une admission d'eau chaude avec un filtre de répartition (10, 43) et une sortie de boisson opposée à l'admission d'eau chaude avec un filtre à café (13, 44) et comprenant un piston (14, 49) qui peut être déplacé dans la chambre d'ébullition (7, 7', 40) transversalement à la direction d'écoulement de l'eau chaude et est muni d'une surface de limitation (15, 15', 47) de la chambre d'ébullition (7, 7', 40), du café en poudre pouvant être dosé automatiquement, caractérisée en ce que lors du dosage de quantités variables de poudre de café afin de faire bouillir des quantités variables de café, la surface de limitation (15, 15', 47) du piston (14, 49) peut être poussée plus ou moins loin dans la chambre d'ébullition (7, 7', 40), de sorte que l'épaisseur de la couche de café en poudre est essentiellement constante dans la direction d'écoulement de l'eau chaude, quelle que soit la quantité de café en poudre, en ce que le filtre à café (13, 44) et le filtre de répartition (10, 43) sont disposés l'un par rapport à l'autre à une distance qui correspond à l'épaisseur de la couche de café en poudre et est essentiellement constante sur la section transversale de la chambre d'ébullition (7, 7', 40) et en ce que pour recouvrir les ouvertures du filtre à café (13, 44) ou du filtre de répartition (10, 43) non utilisées, une paroi latérale (49b) du piston (14, 49) est réalisée sous forme de dispositif de recouvrement coulissant.

2. Machine à café selon la revendication 1, caractérisée en ce que le chambre d'ébullition (7, 7') présente, dans la direction d'écoulement de l'eau chaude, une section transversale essentiellement rectangulaire.

3. Machine à café selon la revendication 1, caractérisée en ce que la chambre d'ébullition (40) présente, dans la direction d'écoulement de l'eau chaude, une section transversale annulaire.

4. Machine à café selon la revendication 3, caractérisée en ce que l'admission d'eau chaude (42) traverse la paroi annulaire extérieure et la sortie de boisson (45) la paroi annulaire intérieure.

5. Machine à café selon la revendication 3 ou 4, caractérisée en ce que la paroi annulaire intérieure est réalisée sous forme de piston de filtre (48) et peut être déplacée relativement à la surface de limitation (47).

6. Machine à café selon l'une des revendications 1 à 5, caractérisée en ce que le filtre à café (13, 44) présente un filtre d'appui (44a) avec une ouverture dont la taille est supérieure aux dimensions des particules de café en poudre et un filtre fin (44b) disposé sur le filtre d'appui (44a) sur le côté tourné vers la chambre d'ébullition (40) et présentant des ouvertures dont la taille est inférieure aux dimensions des particules de café en poudre.

7. Machine à café selon l'une des revendications 1 à 6, caractérisée en ce que la surface de limitation (15, 15', 47) présente une flexibilité élastique perpendiculairement à la direction d'écoulement.

8. Machine à café selon l'une des revendications 1 à 7, caractérisée en ce que la chambre d'ébullition (7, 7', 40) est disposée dans un cylindre (6, 41) essentiellement vertical dans la position d'ébullition dans lequel coulisse le piston (14, 49) muni de la surface de limitation (15, 15', 47) disposée essentiellement horizontalement et du dispositif de recouvrement coulissant (14b, 49b).

9. Machine à café selon la revendication 8, caractérisée en ce que la chambre d'ébullition (7, 7', 40) est fermée dans le cylindre (6, 41) par un couvercle (18, 52) amovible, sur le côté opposé à la surface de limitation (15, 15', 47) déplaçable.

10. Machine à café selon la revendication 9, caractérisée en ce que la surface de limitation (15, 15', 47) ou, de préférence, le couvercle (18, 52) sont coniques sur le côté (19, 52a) tourné vers la chambre d'ébullition (7, 7', 40).

11. Filtre à café à utiliser dans une chambre d'ébullition avec une surface de limitation déplaçable, pour une machine à café, en particulier selon l'une des revendications 1 à 10, caractérisé en ce que la taille des ouvertures de filtre augmente d'une zone terminale (50) en direction de l'autre zone terminale (51) du filtre.

12. Filtre à café selon la revendication 11, caractérisé par une section transversale d'écoulement totale essentiellement constante des ouvertures entre les zones terminales (50, 51).

13. Machine à café selon la revendication 3, caractérisée en ce que l'admission d'eau chaude traverse la paroi annulaire intérieure et la sortie de boisson la paroi annulaire extérieure, un filtre à café prenant appui contre la surface intérieure de la paroi annulaire extérieure étant prévu.

## Claims

1. Coffee machine having a brewing chamber (7, 7', 40) which has a hot water inlet with a distribution filter (10, 43) and a drink outlet, located opposite the hot water inlet, with a brewing filter (13, 44), and having piston (14, 49), which is displaceable in the brewing chamber (7, 7', 40) transversely to the direction or flow of the hot water and is provided with a limiting surface (15, 15', 47) of the brewing chamber (7, 7', 40), it being possible for ground coffee to be metered automatically into the brewing chamber (7, 7', 40), characterized in that, when different amounts of ground coffee are metered in for brewing batches of coffee of different sizes, the limiting surface (15, 15', 47) of the piston (14, 49) can be pushed to a different extent into the brewing chamber (7, 7', 40) such that, with the different quantities of ground coffee the thickness of the layer of ground coffee is essentially constant in the direction of flow of the hot water, in that the brewing filter (13, 44) and the distribution filter (10, 43) are arranged with a spacing from one another which is essentially constant over the cross section of the brewing chamber (7, 7', 40) and corresponds to the thickness of the layer of ground coffee, and in that a side wall (49b) of the piston (14, 49) is constructed as a covering slide to cover the unrequired filter openings of the brewing filter (13, 44) or of the distribution filter (10, 43).

2. Coffee machine according to Claim 1, characterized in that the brewing chamber (7, 7') has an essentially rectangular cross section in the direction of flow of the hot water.

3. Coffee machine according to Claim 1, characterized in that the brewing chamber (40) has an annular cross section in the direction of flow of the hot water.

4. Coffee machine according to Claim 3, characterized in that the hot water inlet (42) extends through the outer annular wall and the drink outlet (45) extends through the inner annular wall.

5. Coffee machine according to Claim 3 or 4, characterized in that the inner annular wall is constructed as a filter piston (48) and is displaceable in relation to the limiting surface (47).

6. Coffee machine according to one of Claims 1 to 5, characterized in that the brewing filter (13, 44) has a support filter (44a) having a size of filter opening exceeding the dimensions of the particles of ground coffee and a fine filter (44b), arranged on the support filter (44a) on the side facing the brewing chamber (40), having a size of filter openings less than the dimensions of the particles of ground coffee.

7. Coffee machine according to one of Claims 1 to 6, characterized in that the limiting surface (15, 15', 47) is constructed to be resiliently flexible in the direction perpendicular to the direction of flow.

8. Coffee machine according to one of Claims 1 to 7, characterized in that the brewing chamber (7, 7', 40) is arranged in a cylinder (6, 41) which stands essentially vertically in the brewing position and in which the piston (14, 49), which is provided with the limiting surface (15, 15', 47) arranged essentially horizontally and the covering slide (14b, 49b), is guided in a sliding manner.

9. Coffee machine according to Claim 8, characterized in that the brewing chamber (7, 7', 40) in the cylinder (6, 41) is closed on the side located opposite the adjustable limiting surface (15, 15', 47) by a detachable lid (18, 52).

10. Coffee machine according to Claim 9, characterized in that the limiting surface (15, 15', 47) or, preferably, the lid (18, 52) extends conically on the side (19, 52a) facing the brewing chamber (7, 7', 40).

11. Brewing filter for use in a brewing chamber, having an adjustable limiting surface, for a coffee machine, in particular according to one of Claims 1 to 10, characterized in that the side of the filter openings increases from one end region (50) in the direction towards the other end region (51) of the filter.

12. Brewing filter according to Claim 11, characterized by an essential constant overall through flow cross section of the filter openings between the end regions (50, 51).

13. Coffee machine according to Claim 3, characterized in that the hot water inlet extends through the inner annular wall and the drink outlet extends through the outer annular wall, a brewing filter being provided resting on the inside surface of the outer annular wall.

**FIG.1**

EP 0 295 565 B1

FIG. 2

FIG.3

FIG.4

FIG. 5

FIG. 6